# EUROPÄISCHE PATENTSCHRIFT

(11) **EP 0 947 749 B1**
(45) Veröffentlichungstag und Bekanntmachung des Hinweises auf die Patenterteilung: **18.08.2004**
(21) Anmeldenummer: 99105645.8
(22) Anmeldetag: 19.03.1999
(51) Int. Cl.: F16K 5/06

(54) **Kugelhahn**
Ball valve
Robinet à tournant sphérique

(30) Priorität: 04.04.1998 DE 29806226 U
(43) Veröffentlichungstag der Anmeldung: 06.10.1999
(73) Patentinhaber: Xomox International GmbH & Co., 88131 Lindau (DE)
(72) Erfinder: Gonsior, Wolfgang, 88131 Bodolz (DE)
(74) Vertreter: Schmitt, Meinrad, Dipl.-Ing.

(56) Entgegenhaltungen:
- DE-U- 9 413 091
- FR-A- 1 264 179
- FR-A- 2 505 011
- FR-A- 2 513 343
- US-A- 3 954 251

## Beschreibung

Die Erfindung bezieht sich auf eine Armatur gemäß der im Oberbegriff des Patentanspruchs 1 angegebenen Merkmale.

Aus der US-3 954 251 A ist eine derartige Armatur mit einem als Kugel ausgebildeten Drehkörper bekannt, welcher zum Absperren oder Drosseln eines Strömungsmediums dient. Im Gehäuse sind zwei Dichtringe aus Dichtmaterial axial beabstandet angeordnet, welche jeweils an der sphärischen Außenfläche des Drehkörpers dichtend anliegen. Die Dichtringe enthalten jeweils einen Basiskörper und eine im wesentlichen tangential an der Außenfläche des Drehkörpers anliegende Dichtlippe mit sphärischer Innenfläche, deren Radius etwas kleiner ist als der Radius des kugelförmigen Drehkörpers. In der offenen Position bzw. im unbelasteten Zustand liegen die Dichtlippen mit ihren radial äußeren Enden im wesentlichen linienförmig auf der Außenfläche des kugelförmigen Drehkörpers auf und beim Schließen der Armatur durch Drehen des Drehkörpers wird die Auflagefläche zwischen der Dichtlippe und dem Drehkörper radial nach innen derart verschoben, dass bei hohen Belastungen der Drehkörper auf dem Verbindungsbereich abgestützt ist. Die Dichtlippe wird hierbei, ausgehend von dem radial äußeren Ende zunehmend über ihre gesamte Länge nicht unerheblich deformiert, wobei die Gefahr einer bleibenden plastischen Deformation besteht.

Ferner ist aus der DE 32 05 025 A1 eine Armatur bekannt, welche als Kugelhahn ausgebildet ist und im Gehäuse einen kugelförmigen und schwimmend gelagerten Drehkörper enthält, für dessen Drehung ein durch das Gehäuse abgedichtet hindurchgeführter Schaft vorgesehen ist. Die Dicht- oder Sitzringe für den Drehkörper bestehen aus geeignetem Dichtmaterial wie Polyamid, Kohlegraphit, PTFE (Polytetrafluorethylen), sind massiv ausgebildet und weisen eine geschlossene Querschnittsfläche auf. Wenigstens einem der Dichtringe, welche nachfolgend auch als Sitzringe bezeichnet werden, ist eine Federanordnung zur Vorgabe einer Vorspannung des Sitzringes gegen die sphärische Außenfläche des Drehkörpers zugeordnet. Solche Federanordnungen erfordern einen zusätzlichen Fertigungs- und Montageaufwand. Ferner ergeben sich Schwierigkeiten, wenn korrosive Medien in der Rohrleitung gefördert werden, in welcher eine derartige Armatur angewendet ist. Bekanntlich werden heute Armaturen zunehmend innen mit Auskleidungen, insbesondere aus Kunststoff, versehen, um vor allem die Sicherheitsanforderungen bei korrosiven Medien zu erfüllen oder die Verwendung korrosionsfester, teurer Metalle zu vermeiden. Derartige Kunststoffe wie PTFE, PFA (Perfluoralkoxy), FEP (Fluorethylenpropylon) sind uneingeschränkt korrosionsbeständig gegen praktisch alle Säuren und Laugen in allen Konzentrationen und sind somit universell anwendbar. Federelemente aus Metall würden hierbei einen weiteren Risikofaktor bilden oder zusätzliche und aufwendige Maßnahmen erfordern, sofern eine korrosionsfeste Ausführung unter technologischen und wirtschaftlichen Aspekten überhaupt realisierbar ist.

Ein Dichtring aus PTFE zur Abdichtung der Kugel bei Kugelhähnen ist aus der deutschen Patentanmeldung gemäß DE 37 06 215 A1 bekannt. Der Dichtring besitzt ein zur Rückseite offenes Winkelprofil und enthält einen zur Längsachse im wesentlichen koaxialen Außenmantel sowie eine ringscheibenförmige Dichtmanschette, an welcher die Kugeloberfläche anliegt. Zur Abstützung der Dichtmanschette ist, an deren der Kugeloberfläche abgewandten Rückseite ein im Querschnitt etwa dreieckförmiger Stützring angeordnet, bis zu welchem die Dichtmanschette flexibel zurückbiegbar ist. Eine Veränderung der Auflagefläche des Dichtringes an der Kugeloberfläche in Abhängigkeit der axialen Belastung ist nicht möglich, und eine bleibende plastische Verformung der Dichtmanschette kann schon nach geringer Benutzungsdauer auftreten.

Des weiteren ist aus dem deutschen Gebrauchsmuster gemäß DE 94 13 091 U1 ein Dichtungselement, insbesondere zur Anwendung in Stellgliedern für flüssige oder gasförmige Medien, bekannt. In das Dichtungselement sind Tellerfedern integriert, wodurch ein erheblicher Fertigungsaufwand bedingt ist.

Des weiteren ist aus dem US Patent 3 940 107 ein Ventil, insbesondere ein Kugelhahn bekannt, dessen Dichtring einen im wesentlichen radial gerichteten Steg aufweist. Am radial innenliegenden Ende des Steges ist eine an der drehbaren Kugel anliegende Dichtlippe vorgesehen, welche auf der der Kugel abgewandten Seite eine Verlängerung zur Abstützung im Gehäuse aufweist. Der Steg enthält sowohl in Richtung zur Kugel als auch axial entgegengesetzt zum Gehäuse jeweils eine Ausnehmung, so daß für den Steg und die Dichtlippe eine hinreichende Flexibilität vorgegeben ist. Eine definierte axiale Abstützung der Dichtlippe über deren Verlängerung im Gehäuse ist nicht ohne weiteres möglich, da sowohl die Dichtlippe als auch die genannte Verlängerung bei axialen Belastungen auch in radialer Richtung nach außen bzw. nach innen ausweichen.

Schließlich ist aus der deutschen Patentanmeldung gemäß DE 42 35 913 A1 ein Kugelhahn bekannt, dessen Gehäuse mit einer Auskleidung aus Kunststoff versehen ist. Die Kugel liegt direkt an der Auskleidung an, wobei entweder in der Auskleidung selbst oder in einer Ringnut des Gehäuses eine elastische Einlage vorgesehen ist. Der Fertigungsaufwand für eine derart elastische Einlage ist nicht unerheblich, und es müssen recht enge Toleranzen eingehalten werden, um eine hinreichende Dichtigkeit zu erhalten. Durch Abnutzung und plastische Verformung ergeben sich im Laufe der Zeit nachteilige Änderungen der Dichtwirkung.

Sitzringe aus PTFE oder einem vergleichbaren Dichtmaterial weisen eine plastische Verformbarkeit derart auf, daß bereits durch Einbaukräfte und zusätzlich durch den betriebsmäßig aufzunehmenden Differenzdruck plastische Verformungen auftreten, die sich nicht oder nur langsam zurückbilden, mit der Gefahr einer reduzierten Dichtkraft und Leckage. Eine konstruktiv mit der Montage vorgegebene vergleichsweise hohe Dichtkraft, welche grundsätzlich erst für höhere Drücke notwendig ist, bedingt bereits im drucklosen Zustand ein recht hohes Drehmoment zur Betätigung. Um hinreichend reproduzierbare Verhältnisse zu erhalten, müssen die zulässigen Fertigungstoleranzen eng vorgegeben werden, zumal die Dichtkraft ferner von den Betriebsbedingungen wie Druck, Temperatur u.s.w. beeinflußt wird. In den insbesondere mit Kunststoff ausgekleideten Armaturen werden insbesondere aus Metall bestehende Drehkörper, insbesondere Kugeln oder konische Küken vorgesehen, welche gleichfalls kunststoffummantelt sind oder aus anderen, insbesondere in Verbindung mit korrosiven Medien geeigneten Werkstoffen, wie Oxidkeramik bestehen.

Hiervon ausgehend liegt der Erfindung die Aufgabe zugrunde, die Armatur der genannten Art dahingehend weiterzubilden, daß reduzierte und reproduzierbare Drehmomente zur Betätigung des Drehkörpers erforderlich sind, ohne daß besondere Federelemente vorgesehen werden. Der Fertigungsaufwand soll verringert werden, wobei der Einfluß von Fertigungstoleranzen und Temperaturänderungen auf die Dichtigkeit und das Drehmoment reduziert werden sollen. Auch soll vor allem die Verwendung als inbesondere Kunststoff ausgekleidete Armatur ermöglicht werden.

Die Lösung dieser Aufgabe erfolgt gemäß den im Patentanspruch 1 angegebenen Merkmalen.

Die vorgeschlagene Armatur erfordert einen geringen konstruktiven Aufwand und ermöglicht die Zulassung von größeren Fertigungstoleranzen. Der Dicht- oder Sitzring enthält einen im Gehäuse ohne zusätzliche Federmittel angeordneten Basiskörper und eine flexible Dichtlippe, deren Innenfläche an der sphärischen Außenfläche des schwimmenden Drehkörpers im wesentlichen tangential anliegt, wobei radial innen zur Längsachse ein Verbindungs- und Stützbereich zwischen Basiskörper und Dichtlippe vorhanden ist. Im unbelasteten Zustand ist die flexible Dichtlippe überwiegend im elastischen Bereich verformt. Die Sitz- oder Innenfläche des Sitzringes weist zwei unter verschiedenen Winkeln, näherungsweise tangential zur Außenfläche des Drehkörpers verlaufende Teilflächen auf, wobei nach dem Einbau bzw. im unbelasteten Zustand eine näherungsweise linienförmige oder nur kleine Auflagefläche auf dem Drehkörper vorhanden ist. Das Drehmoment ist auf ein Minimum reduziert und gleichwohl ist eine funktionsgerechte Abdichtung sichergestellt. Bei Zunahme des Differenzdrucks bzw. im niedrigen und mittleren Druckbereich wird die flexible Dichtlippe gleichfalls im elastischen Bereich verformt, wobei die Auflagefläche klein und weitgehend konstant bleibt und die geringe Reaktionskraft nur ein niedriges Drehmoment bedingt. Bei weiter zunehmendem Differenzdruck wird die Auflagefläche radial nach innen zum Verbindungs- und Stützbereich verschoben, welcher nunmehr eine funktionssichere Abstützung des Drehkörpers gewährleistet. Hierbei wird beim austrittsseitigen Sitzring die Dichtkraft dadurch erhöht, daß der Mediendruck auf die Rückseite der Dichtlippe einwirkt und diese verstärkt an den Drehkörper andrückt. Es ist von besonderer Bedeutung, daß auch im oberen Druckbereich bis hin zum maximalen Differenzdruck die Dichtlippe im wesentlichen nur elastisch verformt wird ohne plastische Änderungen zu erfahren. Im oberen Druckbereich bzw. bei hohem Differenzdruck wird der Drehkörper von dem genannten Verbindungsbereich des Sitzringes abgestützt. Hierbei auftretende plastische Verformungen haben keine nachteiligen Auswirkungen. Bei Reduzierung des Differenzdruckes liegt nämlich die elastisch verformbare Dichtlippe mit der erforderlichen Dichtkraft an, und selbst ein aufgrund der plastischen und / oder elastischen Verformung, welche sich nur langsam nach geraumer Zeit gegebenenfalls zurückbildet, des Verbindungsbereichs bedingter Spalt führt nicht zu einer Leckage. Die elastisch verformbare Dichtlippe in Kombination mit dem plastisch verformbaren Verbindungsbereich ermöglicht eine Vergrößerung der zulässigen Fertigungstoleranzen. Erfindungsgemäß haben Fertigungstoleranzen und Temperaturänderungen einen erheblich reduzierten Einfluß auf die Dichtkraft und Dichtigkeit sowie das Drehmoment zur Betätigung des Drehkörpers.

Erfindungsgemäß ist die lnnenfläche der Dichtlippe derart ausgebildet, daß zwei Teilflächen in einem stumpfen Winkel zueinander angeordnet sind. Dabei liegt die Dichtlippe im unbelasteten Zustand am Drehkörper im Bereich der Schnittlinie der beiden, vorzugsweise konischen, Teilflächen an, wobei eine zumindest näherungsweise linienförmige Anlage in diesem Bereich vorgegeben ist. Zur Betätigung des Drehkörpers ist im unbelasteten Zustand oder bei geringem Differenzdruck somit ein geringes Drehmoment erforderlich. Darüberhinaus wird beim Einschwenken der Durchgangskante in den Bereich des Sitzringes des Drehkörpers eine plastische Verformung der flexiblen Dichtlippe vermieden. Die genannte zweite Teilfläche ist zur Längsachse des Sitzringes in einem Winkel größer als der Tangentenwinkel, insbesondere größer 45° geneigt, wodurch eine unerwünschte starke Anpressung beim Einschwenken und der koaxialen Ausrichtung des Drehkörpers bzw. dessen Längsachse zur Längsachse des Sitzringes vermieden wird.

Weiterbildungen und besondere Ausgestaltungen der Erfindung sind in den Unteransprüchen sowie der weiteren Beschreibung angegeben.

Die Erfindung wird nachfolgend anhand des in der Zeichnung dargestellten besonderen Ausführungsbeispiels näher erläutert. Es zeigen:
- Fig. 1: einen Längsschnitt durch die Kugelhahn ausgebildete Armatur,
- Fig. 2: den Sitzring in einem axialen Schnitt,
- Fig. 3: schematisch und vergrößert das Detail A gemäß Fig. 1 im unbelasteten Zustand,
- Fig. 4, 5: vergrößert das Detail A beim Einschwenken des Drehkörpers.

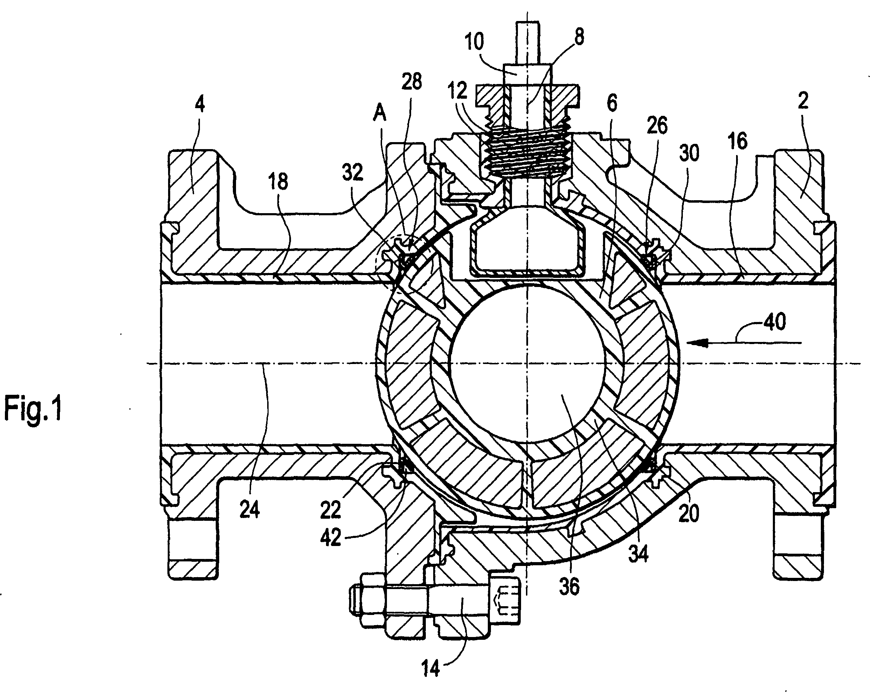

Fig. 1 zeigt die Armatur mit einem zweiteiligen Gehäuse 2, 4, in welchem ein Drehkörper 6 um eine Achse 8 drehbar und bevorzugt schwimmend angeordnet ist. Mit dem in zweckmäßiger Weise als Kugel ausgebildeten Drehkörper 6 steht ein Schaft 10 in Eingriff, welcher durch das Gehäuse 4 durchgeführt ist, wobei Dichtmittel 12 vorgesehen sind. Das Gehäuse bzw. die beiden Gehäuseteile 2, 4 sind in bekannter Weise mittels Schrauben 14 miteinander verbunden und die mit dem Medium in Berührung gelangenden Innenflächen sind mit einer Auskleidung 16, 18, insbesondere aus Kunststoff, versehen.

Dem Drehkörper 6 sind ferner zwei Sitzringe 20, 22 bezüglich der Längsachse 24 des Gehäuses axial beabstandet angeordnet. Die Sitzringe 20, 22 weisen einen V-förmigen Querschnitt auf und bestehen aus einem plastisch und elastisch verformbaren Dichtmaterial, insbesondere PTFE oder einem vergleichbaren Werkstoff bzw. Kunststoff. Die Gehäuseteile 2, 4 enthalten im wesentlichen rechtwinklige Aufnahmen 26, 28 für die genannten Sitzringe 20, 22, welche an einer dem Drehkörper 6 abgewandten Stützfläche 30, 32 anliegen. Der als Kugel ausgebildete Drehkörper 6 besteht im wesentlichen aus Metall, wobei die mit dem Medium in Berührung kommenden Flächen mit einer Auskleidung 34, insbesondere aus Kunststoff, versehen sind. Innen enthält der Drehkörper 6 in bekannter Weise eine Durchgangsbohrung 36. In der dargestellten Position des Drehkörpers ist der Strömungsweg abgesperrt, während nach Drehung um 90° bezüglich der Drehachse 8 das Medium durch die Durchgangsbohrung 36 und durch die Armatur durchströmen kann.

Ist die Armatur in der geöffneten Stellung des Drehkörpers 6 beispielsweise in Richtung des Pfeiles 40 durchströmbar, so wirkt auf den Drehkörper 6 in der dargestellten Sperrposition eine Kraft gleichfalls in der Richtung des Pfeiles 40. Der insbesondere schwimmend gelagerte Drehkörper 6 wird in der gleichen Richtung auf den Druck abgewandt eingebauten Sitzring 22 verlagert, wobei der eingangsseitige Sitzring 20 entlastet wird. Beim Erreichen eines vorgebbaren Differenzdrucks ist die Dichtkraft des eingangsseitigen Sitzringes 20 derart reduziert, daß dort eine Leckage auftritt. Aufgrund der V-förmigen Ausbildung zumindest des druckabgewandten Sitzringes 22 und des derart gebildeten Ringraumes 42 auf der Rückseite der flexiblen Dichtlippe wirkt eine die Dichtkraft dieser Dichtlippe unterstützende Kraftkomponente. Bei höheren Differenzdrücken wird also die Dichtlippe des druckabgewandten eingebauten Sitzringes 22 durch das Medium unterstützt verstärkt an den Drehkörper angepreßt.

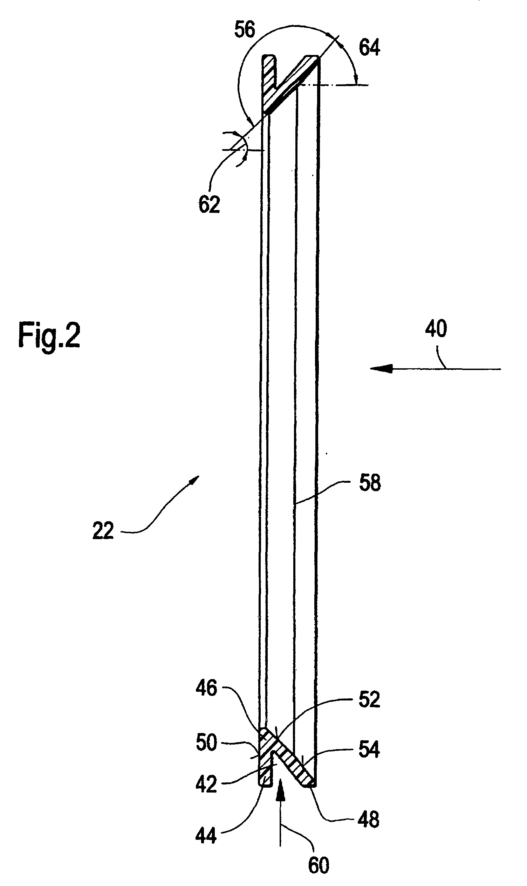

Fig. 2 zeigt vergrößert den Sitzring 22 mit V-förmigen Querschnitt. Der Sitzring 22 enthält einen Basiskörper 44, einen radial innenliegenden massiven Verbindungsbereich 46 sowie eine zur Längsachse 24 radial nach außen geneigte Dichtlippe 48. Zwischen dem Basiskörper 44 und der Dichtlippe 48 liegt der bereits erwähnte Ringraum 42. Der Basiskörper 44 weist eine im wesentlichen in einer Radialebene Anlagefläche 50 auf, mit welcher der Sitzring 22 an der oben erwähnten zur Längsachse im wesentlichen orthogonalen Stützfläche des Gehäuses anliegt. Die dem Drehkörper zugewandte Innenfläche der Dichtlippe 48 enthält eine radial innere erste Teilfläche 52 und eine radial weiter außen angeordnete zweite Teilfläche 54. Die beiden bevorzugt konischen Teilflächen 52, 54 sind in einem stumpfen Winkel 56 angeordnet und schneiden sich in einer Schnittlinie 58, welche zumindest näherungsweise etwa in der Mitte der radialen Erstreckung der Innenfläche liegt. Der stumpfe Schnittwinkel 56 liegt in zweckmäßiger Weise im Bereich zwischen 170 bis 178°, insbesondere im Bereich zwischen 173 bis 176°. Von Bedeutung ist ferner, daß die erste Teilfläche 52 zumindest näherungsweise tangential zum Anlagebereich der Außenfläche des Drehkörpers 6 angeordnet ist. Beträgt in einer besonderen Ausgestaltung der Neigungswinkel 62 der ersten inneren Teilfläche 52 beispielsweise 45°, so ist der Neigungswinkel 64 der äußeren zweiten Teilfläche 54 mit 50° vorgegeben und folglich der erläuterte stumpfe Winkel 56 mit 175°. Der äußere Neigungswinkel 64 ist in bevorzugter Weise um einen vorgegebenen kleinen Winkel größer als der tangentiale innere Neigungswinkel 62.

In bevorzugter Weise ist der Sitzring 22 dem Drehkörper derart zugeordnet, daß im unbelasteten Zustand oder bei nur geringem Differenzdruck die Auflagefläche der Dichtlippe 48 an der Außenfläche des Drehkörpers die Schnittlinie 58 enthält und/oder im wesentlichen durch diese gebildet wird. Hierdurch ist einerseits eine funktionssichere Abdichtung gewährleistet und zur Betätigung ist nur ein recht geringes Drehmoment erforderlich. Wie bereits erläutert, wird mit zunehmendem Differenzdruck der Drehkörper in Richtung des Pfeils 40 bewegt und verstärkt gegen den Sitzring 22 gepreßt. Hierdurch wird erfindungsgemäß die Auflagefläche vergrößert und/oder radial nach innen bis zum Verbindungsbereich 46 verschoben. Der massive, weitgehend steife Verbindungsbereich 46 gewährleistet eine sichere Abstützung bei höheren Belastungen bis zum maximalen Differenzdruck, wobei eine plastische Verformung eintritt. Wesentlich ist insoweit, daß die flexible Dichtlippe 48 im wesentlichen ausschließlich elastisch verformt wird. Bei einer nachfolgenden Reduzierung des Differenzdrucks wirkt sich die plastische Verformung des Verbindungsbereiches 46 nicht nachteilig aus, da die Abdichtung funktionssicher mittels der Dichtlippe 48 gewährleistet ist. Bei oder nach der Reduzierung des Differenzdrucks bewegt sich der Drehkörper entgegen der Richtung des Pfeiles 40 in die Ausgangsposition zurück und die Verformung des Verbindungsbereiches 46 kann sich wieder zurückbilden.

Ergibt sich bei hohen Differenzdrücken wie vorstehend bereits erwähnt, am eingangsseitigen Sitzring eine Leckage, so wird der Mediumdruck im Ringraum 42 wirksam und preßt verstärkend die Dichtlippe 48 des ausgangsseitigen Sitzringes 22 an den Drehkörper. Bei maximalem Differenzdruck wird in besonders zweckmäßiger Weise die Dichtlippe 48 weitgehend mit ihrer gesamten Innenfläche, also der ersten Teilfläche 52 ebenso wie mit der zweiten Teilfläche 54 an die sphärische Außenfläche des Drehkörpers gepreßt. Ferner ist der Sitzring 22 erfindungsgemäß derart ausgebildet, daß bei hohem Differenzdruck infolge des einwirkenden Mediumdrucks auf den Sitzring 22 der Verbindungsbereich 46 in radialer Richtung gemäß Pfeil 60 radial nach innen zur Längsachse 24 elastisch verformt wird. Der gesamte Sitzring 22 wird hierbei keilförmig in den Spalt zwischen dem Gehäuse und dem Drehkörper hineinbewegt. Die Auslegung des Sitzringes ist erfindungsgemäß derart vorgegeben, daß insoweit ausschließlich eine elastische Verformung erfolgt, welche sich unmittelbar nach der Druckentlastung wieder zurückbildet. Die bereits erläuterte axiale Verformung infolge der axialen Verschiebung des Drehkörpers infolge des hohen Differenzdrucks führt hingegen auch zu einer quasi plastischen, erst nach geraumer Zeit sich gegebenenfalls zurückbildenden Verformung des Verbindungsbereiches, wobei jedoch die Dichtlippe 48 gleichfalls ausschließlich elastisch verformt wird. Nach Druckentlastung wird die Dichtwirkung funktionssicher mittels der elastischen Dichtlippe 48 aufrechterhalten, wobei die erst allmählich erfolgende Rückbildung der plastischen Verformung des Verbindungsbereiches keine nachteiligen Wirkungen hinsichtlich der gesamten Dichtwirkung ergibt.

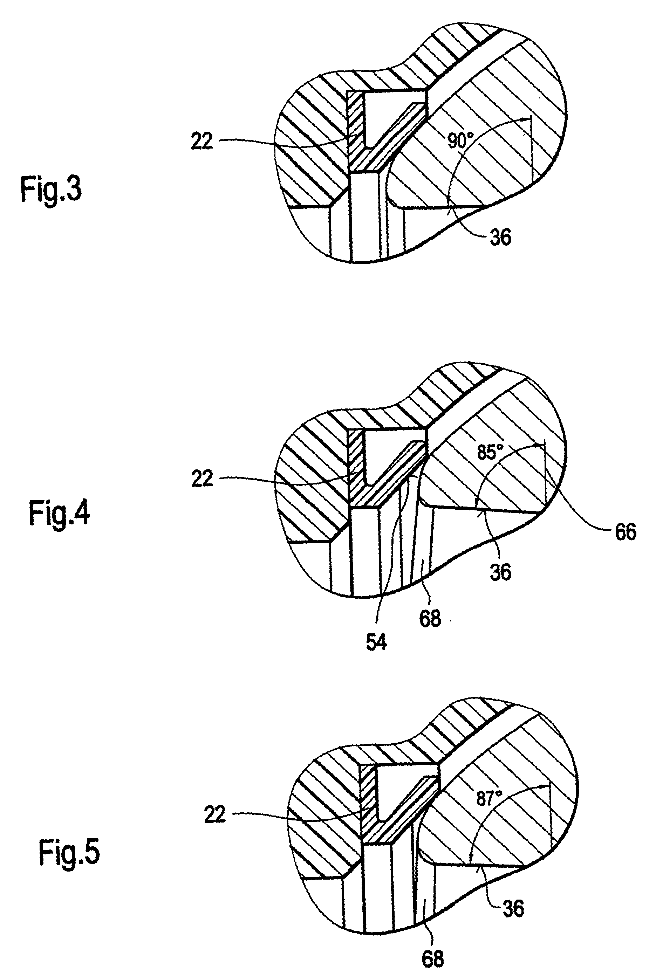

Fig. 3 zeigt das Detail A gemäß Fig. 1, wobei der Drehkörper um 90° bezüglich der Drehachse gedreht ist und die Durchgangsbohrung 36 koaxial zur Längsachse steht, zu weicher die Hilfslinie 66 orthogonal verlauft. Wie ersichtlich, liegt die Schnittlinie im Anlagebereich der Dichtlippe an der sphärischen Außenfläche des Drehkörpers an.

Fig. 4 und 5 zeigen den Drehkörper in teilweise geöffneten Zuständen, wobei gemäß Fig. 4 die Längsachse des Drehkörpers noch 5° von der koaxialen Ausrichtung mit der Längsachse des Sitzringes 22 abweicht, während Fig. 5 die Abweichung lediglich noch 3° beträgt. Das Einschwenken der zweckmäßig abgerundeten Durchgangskante 68 der Durchgangsbohrung 36 ist störungsfrei aufgrund des vergrößerten äußeren Neigungswinkels durchführbar. Infolge der erfindungsgemäßen Abwinkelung der äußeren Teilfläche 54 wird das Einschwenken ermöglicht, ohne daß das radiale freie Ende den Einschwenkvorgang behindern oder hierbei gar beschädigt würde.

### Bezugszeichen

- 2, 4: Gehäuse
- 6: Drehkörper / Kugel
- 8: Drehachse
- 10: Schaft
- 12: Dichtmittel
- 14: Schraube
- 16, 18: Auskleidung
- 20, 22: Sitzring / Dichtring
- 24: Längsachse von 2, 4
- 26, 28: Aufnahme für 20, 22
- 30, 32: Stützfläche
- 34: Auskleidung von 6
- 36: Durchgangsbohrung
- 40: Pfeil
- 42: Ringraum
- 44: Basiskörper
- 46: Verbindungsbereich
- 48: Dichtlippe
- 50: Anlagefläche von 22
- 52: innere Teilfläche
- 54: äußere Teilfläche
- 56: stumpfer Winkel
- 58: Schnittlinie
- 60: Pfeil
- 62, 64: Neigungswinkel
- 66: Hilfslinie
- 68: Durchgangskante

## Patentansprüche

1. Armatur enthaltend ein Gehäuse (2, 4), einen in diesem drehbaren, vorzugsweise kugelförmigen Drehkörper (6) sowie zwei Dichtringe (20, 22) aus Dichtmaterial, vorzugsweise Polytetrafluorethylen oder einem vergleichbaren Kunststoff, welche im Gehäuse (2, 4) axial beabstandet angeordnet sind und an der vorzugsweise sphärischen Außenfläche des Drehkörpers (6) dichtend anliegen, wobei wenigstens einer der beiden Dichtringe (20, 22) einen Basiskörper (44) und eine Dichtlippe (48) aufweist, deren Innenfläche zumindest teilweise eine im wesentlichen tangential an der Außenfläche des Drehkörpers (6) anliegende Auflagefläche bildet, wobei zwischen der Dichtlippe (48) und dem Basiskörper (44) ein radial innen liegender Verbindungsbereich (46) vorgesehen ist und wobei mit zunehmender Belastung die Auflagefläche zwischen der Dichtlippe (48) und dem Drehkörper (6) radial nach innen derart verschoben wird, dass bei hohen Belastungen der Drehkörper (6) auf dem Verbindungsbereich (46) abgestützt ist,
**dadurch gekennzeichnet, dass** die dem Drehkörper (6) zugewandte Innenfläche der flexiblen Dichtlippe (48) zwei, unter einem stumpfen Winkel (56) angeordnete Teilflächen (52, 54) aufweist und dass im unbelasteten Zustand über deren Schnittlinie (58), welche sich innerhalb der Auflagefläche befindet, die Auflage der Dichtlippe (48) auf dem Drehkörper (6) erfolgt.

2. Armatur nach Anspruch 1, **dadurch gekennzeichnet, dass** die Teilflächen (52, 54) im wesentlichen konisch ausgebildet sind.

3. Armatur nach Anspruch 1 oder 2, **dadurch gekennzeichnet, dass** die flexible Dichtlippe (48) des im wesentlichen V-förmig ausgebildeten Dichtringes (20, 22) in einem Winkel in der Größenordnung von 45° bezüglich der Längsachse (24) geneigt angeordnet ist.

4. Armatur nach Anspruch 1 bis 3, **dadurch gekennzeichnet, dass** die erste radial innere Teilfläche (52) unter einem Neigungswinkel (62) in der Größenordnung von 45° bezüglich der Längsachse (24) geneigt angeordnet ist und/oder dass die radial äußere zweite Teilfläche (54) bezüglich der Längsachse (24) unter einen Neigungswinkel (64) geneigt ist, welcher um einen vorgegebenen Winkel größer ist, und zwar insbesondere im Bereich 3 und 8°, vorzugsweise zwischen 4 und 7°, als der Neigungswinkel (62) der inneren Teilfläche (52).

5. Armatur nach einem der Ansprüche 1 bis 4, **dadurch gekennzeichnet, dass** die Schnittlinie (58) der inneren und äußeren Teilflächen (52, 54) im wesentlichen in der Mitte der radialen Erstreckung der Innenfläche der Dichtlippe (48) vorgesehen ist.

6. Armatur nach einem der Ansprüche 1 bis 5, **dadurch gekennzeichnet, dass** der Basiskörper (4) und /oder der Verbindungsbereich (46) in der gleichen Ebene, vorzugsweise in einer Radialebene, angeordnet sind

7. Armatur nach einem der Ansprüche 1 bis 6, **dadurch gekennzeichnet, dass** zumindest der Verbindungsbereich (46), bevorzugt auch der Basiskörper (44), an einer im wesentlichen in einer Radialebene liegenden Stützfläche (30, 32) des Gehäuses (2, 4) anliegen.

8. Armatur nach einem der Ansprüche 1 bis 7, **dadurch gekennzeichnet, dass** der Dichtring (20, 22) aus einem plastisch und elastisch verformbaren Dichtmaterial besteht und derart ausgebildet und in Kombination mit dem Drehkörper (6) im Gehäuse (2, 4) derart angeordnet ist, dass bei Belastung die Dichtlippe (48) im wesentlichen nur elastisch verformbar ist, während der Verbindungsbereich (46) sowohl plastisch als auch elastisch verformbar ist.

9. Armatur nach einem der Ansprüche 1 bis 8, **dadurch gekennzeichnet, dass** das Gehäuse (2, 4) eine Auskleidung (16, 18), insbesondere aus Kunststoff, aufweist und / oder dass der Drehkörper (6) in den mit dem Strömungsmedium in Berührung gelangenden Bereichen gleichfalls eine Auskleidung (34) aufweist oder aus einem bezüglich des Strömungsmediums resistenten Material besteht.

10. Armatur nach einem der Ansprüche 1 bis 9, **dadurch gekennzeichnet, dass** der V-förmige Dichtring (20, 22) im Bereich der Rückseite der Dichtlippe (48) einen bevorzugt näherungsweise dreieckförmigen Ringraum (42) enthält und /oder dass der Ringraum (42) des Sitzringes (22) auf der druckabgewandten Seite bei hoher Belastung mit dem Mediumdruck zur Erhöhung der Dichtkraft beaufschlagbar ist.

## Claims

1. Fitting comprising a housing (2,4), a, preferably spherical, rotatable body (6) which can rotate therein, and two sealing rings (20, 22) made of sealing material, preferably polytetrafluoroethylene or a comparable plastics material, which are arranged axially spaced in the housing (2, 4) and rest in a sealing manner against the, preferably spherical, outer surface of the rotatable body (6), at least one of the two sealing rings (20, 22) comprising a base body (44) and a sealing lip (48), of which the inner surface at least partially forms a contact surface adjoining the outer surface of the rotatable body substantially tangentially, a radially inwardly located connecting region (46) being provided between the sealing lip (48) and the base body (44), and with increased pressure, the contact surface between the sealing lip (48) and the rotatable body (6) being displaced radially inwardly such that the rotatable body is supported by the connecting region on application of an increased pressure, **characterised in that** the inner surface of the flexible sealing lip (48) which faces the rotatable body (6) comprises two partial surfaces (52, 54) arranged at an obtuse angle (56), and **in that** the sealing lip (48) in an unstressed state rests against the rotatable body (6) along a line of intersection (58) between the partial surfaces and within the contact surface.

2. Fitting according to claim 1, **characterised in that** the partial surfaces (52, 54) are substantially conical in configuration.

3. Fitting according to claim 1 or 2, **characterised in that** the flexible sealing lip (48) of the substantially V-shaped sealing ring (20, 22) is arranged inclined at an angle of about 45° relative to the longitudinal axis (24).

4. Fitting according to claims 1 to 3, **characterised in that** the first radially inner partial surface (52) is arranged at an angle of inclination (62) of about 45° relative to the longitudinal axis (24) and/or **in that** the radially outer second partial surface (54) is inclined relative to the longitudinal axis (24) at an angle of inclination (64) which is larger by a predetermined angle and, more precisely, in particular in the range of 3 to 8°, preferably between 4 and 7°, than the angle of inclination (62) of the inner partial surface (52).

5. Fitting according to any one of claims 1 to 4, **characterised in that** the line of intersection (58) of the inner and outer partial surfaces (52, 54) is provided substantially halfway along the radial extension of the inner surface of the sealing lip (48).

6. Fitting according to any one of claims 1 to 5, **characterised in that** the base body (4) and/or the connecting region (46) are arranged in the same plane, preferably in a radial plane.

7. Fitting according to any one of claims 1 to 6, **characterised in that** at least the connecting region (46), preferably also the base body (44), rests against a support surface (30, 32) of the housing (2, 4) located substantially in a radial plane.

8. Fitting according to any one of claims 1 to 7, **characterised in that** the sealing ring (20, 22) is composed of a plastically and resiliently deformable sealing material and is constructed and arranged in the housing (2, 4) in combination with the rotatable body (6) such that the sealing lip (48) is substantially only resiliently deformable under pressure, while the connecting region (46) is both plastically and resiliently deformable.

9. Fitting according to any one of claims 1 to 8, **characterised in that** the housing (2, 4) has a lining (16, 18), in particular made of plastics material, and/or **in that** the regions of the rotatable body (6) which come into contact with the fluid medium also have a lining (34) or comprise a material which is resistant to damage from the fluid medium.

10. Fitting according to any one of claims 1 to 9, **characterised in that**, in the region of the back of the sealing lip (48), the V-shaped sealing ring (20, 22) has a preferably approximately triangular annular space (42) and/or **in that**, on the pressure-remote side, the annular space (42) of the seat ring (22) can be loaded on application of an increased pressure of the medium to increase the sealing force.

## Revendications

1. Accessoire de robinetterie comprenant un boîtier (2, 4), un corps tournant (6) de préférence sphérique pouvant tourner dans celui-ci, et deux bagues d'étanchéité (20, 22) en matériau d'étanchéité, de préférence du polytétrafluoroéthylène ou une matière plastique comparable, qui sont placées à distance axiale l'une de l'autre dans le boîtier (2, 4) et s'appuient de manière hermétique contre la surface extérieure de préférence sphérique du corps tournant (6), au moins l'une des deux bagues d'étanchéité (20, 22) présentant un corps (44) de base et une lèvre d'étanchéité (48), dont la surface intérieure forme au moins partiellement une surface d'appui s'appuyant pour l'essentiel tangentiellement sur la surface extérieure du corps tournant (6), une zone de liaison (46) située à l'intérieur radialement étant prévue entre la lèvre d'étanchéité (48) et le corps (44) de base et, quand la charge augmente, la surface d'appui entre la lèvre d'étanchéité (48) et le corps tournant (6) étant déplacée radialement vers l'intérieur de telle manière qu'aux fortes charges, le corps tournant (6) est appuyé sur la zone de liaison (46), ***caractérisé en ce que*** la surface intérieure de la lèvre d'étanchéité flexible (48) tournée vers le corps tournant (6) présente deux parties de surface (52, 54) placées suivant un angle obtus (56), et ***en ce qu'à*** l'état hors charge, l'appui de la lèvre d'étanchéité (48) sur le corps tournant (6) s'effectue par l'intermédiaire de sa ligne d'intersection (58) qui se trouve à l'intérieur de la surface d'appui.

2. Accessoire de robinetterie selon la revendication 1, ***caractérisé en ce que*** les parties de surface (52, 54) sont pour l'essentiel de conformation conique.

3. Accessoire de robinetterie selon la revendication 1 ou 2, ***caractérisé en ce que*** la lèvre d'étanchéité flexible (48) de la bague d'étanchéité (20, 22) conformée pour l'essentiel en V est placée inclinée selon un angle de l'ordre de 45° par rapport à l'axe longitudinal (24).

4. Accessoire de robinetterie selon la revendication 1 à 3, ***caractérisé en ce que*** la première surface intérieure radiale (52) est disposée inclinée d'un angle d'inclinaison (62) de l'ordre de 45° par rapport à l'axe longitudinal (24), et/ou ***en ce que*** la deuxième partie de surface extérieure radiale (54) est inclinée d'un angle d'inclinaison (64) par rapport à l'axe longitudinal (24) qui est supérieur d'un angle prédéterminé, en particulier compris entre 3° et 8°, de préférence entre 4° et 7°, à l'angle d'inclinaison (62) de la partie de surface intérieure.

5. Accessoire de robinetterie selon l'une quelconque des revendications 1 à 4, ***caractérisé en ce que*** la ligne d'intersection (58) des parties de surface intérieure et extérieure (52, 54) est prévue pour l'essentiel au milieu de l'extension radiale de la surface intérieure de la lèvre d'étanchéité (48).

6. Accessoire de robinetterie selon l'une quelconque des revendications 1 à 5, ***caractérisé en ce que*** le corps de base (4) et/ou la zone de liaison (46) sont placés dans le même plan, de préférence dans un plan radial.

7. Accessoire de robinetterie selon l'une quelconque des revendications 1 à 6, ***caracté*** ***risé en ce qu'au*** moins la zone de liaison, et de préférence également le corps de base (44), s'appuie(nt) contre une surface d'appui (30, 32) du boîtier (2, 4) située pour l'essentiel dans un plan radial.

8. Accessoire de robinetterie selon l'une quelconque des revendications 1 à 7, ***caractérisé en ce que*** la bague d'étanchéité (20, 22) est constituée d'un matériau d'étanchéité déformable plastiquement et élastiquement, et est conformée et agencée dans le boîtier (2, 4) en combinaison avec le corps tournant (6) de telle manière qu'en cas de charge, la lèvre d'étanchéité (48) n'est pour l'essentiel déformable qu'élastiquement, tandis que la zone de liaison (48) est déformable plastiquement et élastiquement.

9. Accessoire de robinetterie selon l'une quelconque des revendications 1 à 8, ***caractérisé en ce que*** le boîtier (2, 4) présente une garniture (16, 18), en particulier en matière plastique, et/ou ***en ce que*** le corps tournant (6) présente également une garniture (34) dans les parties en contact avec le fluide en écoulement, ou est constitué d'un matériau résistant au fluide en écoulement.

10. Accessoire de robinetterie selon l'une quelconque des revendications 1 à 9, ***caractérisé en ce que*** la bague d'étanchéité (20, 22) en forme de V contient au niveau de la face arrière de la lèvre d'étanchéité (48) un espace annulaire (42) de préférence approximativement triangulaire et/ou ***en ce qu'en*** cas de charge importante, l'espace annulaire (42) de la bague (22) de siège peut être exposé à la pression du fluide du côté opposé à la pression afin d'augmenter la force d'étanchéité.
